# EUROPEAN PATENT APPLICATION

(11) **EP 3 272 415 A1**
(43) Date of publication of application: **24.01.2018**
(21) Application number: 17181774.5
(22) Date of filing: 18.07.2017
(51) Int. Cl.: B01D 53/85, F24F 3/16

(54) **METHOD OF BIOLOGICAL TREATMENT OF EXHAUST AIR, BIOFILM, PACKING MATERIAL OF THE BIOFILTER AND BIOFILTER MEDIUM TO IMPLEMENT THIS METHOD**

(30) Priority: 18.07.2016 CZ 20160440
(71) Applicant: DEKONTA, a.s., 27342 Stehelceves (CZ); Jihoceska Universita V Ceskych Budejovicich, 370 05 Ceské Budejovice (CZ)
(72) Inventor: Hnátková, Tereza, 16100 Praha 6 (CZ); Seres , Michal, 16300 Praha 6 (CZ); Bárta, Jirí, 39002 Tábor (CZ); Stanková, Pavla, 33001 Kysice (CZ); Bosková, Hana, 34022 Nýrsko (CZ)
(74) Representative: Sedlák, Jirí

(57) **Abstract**

The invention concerns a method of biological treatment of exhaust air in an environment whose temperature exceeds 35 °C to remove volatile organic acids and/or their derivatives, a biofilm, packing material of the biofilter and biofilter medium to implement this method. The packing material of the biofilter of the biofilter is enriched with volatile organic acid forming a secondary source of energy for immobilised organisms. The biofilm is formed by a mixture of the thermophylic strain *Geobacillus caldoxylosilyticus* BGSC W98A1 and the thermotolerant strain *Aeribacillus pallidus* in the ratio ranging from 1:5 to 5:1 and the exhaust air is supplied to the biofilter within the temperature range from 35 to 75 °C.

## Description

### Field of the Invention

The invention relates to the biological treatment of exhaust air to remove volatile organic acids and/or their derivatives using a biofilter in an environment whose temperature exceeds 35 °C; the invention also concerns the biofilter medium comprised of a packing material of the biofilter and biofilm.

### Backaround of the Invention

Odour-related problems must be dealt with by a number of industrial factories and manufacturing halls and also certain processes performed in wastewater treatment plants. A number of methods are employed to remove volatile organic compounds and odorous substances from air. One of the known methods for the removal of volatile organic compounds and odorous substances from air is represented by the biological treatment of exhaust gases, which is a modern method of organic pollution treatment utilizing the enzyme system of microorganisms thanks to which they are able to decompose undesirable organic compounds contained in gases. A biological filter, or a biofilter, refers to a well-described and well-proven technology for air treatment, or the removal of odour where applicable.

The elementary principle of the bio-remedial technology of biofilters is based on the ability of certain microorganisms to utilize volatile organic compounds or organic odorous substances as a source of carbon and energy for their growth. Thanks to these processes such compounds are degraded into harmless products. In polluted sites or in transport lines of contaminated hot gases, or masses of air, the occurrence of microorganisms adapted to the present pollutant can be often seen. However, the pollutant concentration is usually not sufficient to remove such microorganisms efficiently. The low availability of the pollutant for the microorganisms may be caused by their low solubility in water influenced by water salinity or changes in temperature. Another cause can be e.g. a lack of mineral nutrients or the absence of a suitable electron acceptor - for example O₂ in the case of aerobic processes.

Biofilters represent an artificial environment removing organic as well as inorganic pollutants not only from air on the principle of biological degradation in a microbial biofilm on a packing material of the biofilter. The packing material of the biofilter is often comprised of organic materials allowing the attachment and growth of the microorganisms who utilize the odorous substances as nutrients. The odorous substances must also be attached to the packing material of the biofilter and therefore the surface of the packing material of the biofilter must be as large as possible. Considering the fact that microorganisms need water, the biofilter medium must be maintained wet. In this manner odour is removed from the air mass which has been brought together from individual sections of the operations by the air-conditioning system. The attained environmental benefits rest in particular in a reduction of odour emissions.

Specific requirements for the treatment of hot exhaust air need to be considered in the following industrial areas which have been identified as the most relevant in terms of the innovative concept of thermophylic bio-filtration: composting; fodder drying facilities; waste sludge drying; drying plants for foods and fruits, coffee-roasting plants, smoke houses; manufacturing plants for paints and varnishes; farms, in particular pig farms, dumping sites in particular for waste materials. Waste gases from these operations often represent a mixture of tens up to hundreds of volatile organic compounds of which about one fourth represents sensory active or odorous substances (O'Neill a Phillips, 1992).

The preferred embodiment represents the utilization of thermophylic microorganisms to remove volatile organic compounds and odorous substances from hot exhaust air. Thermophylic microorganisms rank among significant degraders of organic compounds with a majority of which being prokaryotes. The optimal temperature for their growth is higher than 45 °C, usually about 50 to 60 °C, or even 80 °C in some bacterial strains. Some extreme thermophylic strains of the Archaea domain grow even at temperatures exceeding 100 °C. However, if the temperature drops under 40 °C, the growth of a majority of thermophylic bacteria completely stops. The main benefit is seen in the highly stable enzymes that remain active at high temperatures. Temperature also influences the rate of chemical reactions; with a temperature rise by 10 °C the reaction rate increases 1.5 to 3 times. Thermophylic enzymes thus represent a group of promising enzymes that can be utilized in technological processes occurred at high temperatures which results in a decreased contamination of operations and in the elimination of the energy-intensive necessity to cool down the air mass prior to entering the biofilter.

Solutions on the basis of thermophylic biofilters to remove volatile organic compounds and odorous substances from air are already known. The KR 20030090369 document describes a biofilter utilizing the thermophylic bacterial strains *Bacillus thermoleovorans* degrading in particular hydrogen sulphide, benzene and toluene at high temperatures. A similar solution is described in the American patent applications US 2010233790 or US 20090093042, where the biodegradation of volatile organic compounds in air occurs within the temperature range from 50 to 85 °C. Among the disadvantages of biofilters arranged in this manner are in particular the high expenditures required to maintain the high temperature at a constant level. Thermophylic organisms require relatively high temperatures for their growth and reproduction and even a little reduction in temperature under the optimal level results in the discontinuation of the growth and reproduction of a majority of thermophylic organisms, which means that the biofilter is no longer functional. Moreover, at any technological outages it is necessary to ensure the respective technological parameters such as temperature regime, humidity, etc. for the biofilter concerned. Another disadvantage is that the thermophylic technologies described above utilize pure bacterial strains which are much more sensitive to temperature fluctuations compared to mixed populations found in nature. A majority of thermophylic species have to cooperate on degradation (so called syntrophy) to acquire as much energy as possible for growth. This concerns in particular the representatives of the anaerobic strains *Syntrophothermus, Methanothermobacter, Pelotomaculum* or *Desulfotomaculum.* From among aerobic thermophylic representatives of bacterial strains *Firmicutes* (such as *Geobacillus, Thermus* and *Paenibacillus*) have been mentioned.

One of the serious problems concerning the removal of volatile organic compounds from air are volatile organic acids, in particular propionic acid. This carboxylic acid irritates mucous membranes, its inhalation results in oedema in the respiratory system, it burns skin, mouth, throat and can lead to blindness or the perforation of oesophagus and stomach. If released into the environment, propionic acid means a hazardous burden. It is necessary to cover the spilled liquid by absorption material, such as vermiculite, sand or soil, collect the mixture into covered containers and have it disposed subsequently by a specialist provider as there are no commonly available methods allowing propionic acid to be removed from the environment.

The task of the invention is to eliminate the aforementioned deficiencies and create a method of exhaust air treatment removing volatile organic compounds, their derivatives or odorous substances that is able to remove such compounds from air easily, that is able to resolve the problem with temperature fluctuation between thermophylic and mesophylic operations or the problem with drying up, whose operation is efficient from economic and time points of view and that allows an easy and cheap intensification of the process of the removal of pollutants from air, in particular propionic acid whose commonly known methods of extraction are demanding and complicated.

### Summary of the Invention

The deficiencies mentioned above are eliminated by the method of biological treatment of exhaust air removing volatile organic acids and/or their derivatives in a biofilter, biofilm, packing material of the biofilter and the biofilter medium to implement this method based on this invention. When using the method of biological treatment of exhaust air in an environment whose temperature is higher than 30 °C to remove volatile organic acids and/or their derivatives the exhaust air is supplied to the biofilter onto a packing material of the biofilter comprised of polyurethane foam-based biodegradable material equipped with a biofilm formed by immobilised microorganisms capable of removing volatile organic acids and/or their derivatives. The summary of the invention is based on a packing material of the biofilter enriched with volatile organic acid as a secondary source of energy for the immobilised microorganisms with a biofilm being a mixture of the thermophylic strain *Geobacillus caldoxylosilyticus* BGSC W98A1 and the thermotolerant strain *Aeribacillus pallidus* in the ratio ranging from 1:5 to 5:1 depending on the thermal operating regime of the facility. Exhaust air is supplied to the biofilter at temperatures ranging from 35 to 75 °C.

Thanks to the used mixture of microorganisms that includes both thermophylic and thermotolerant strains, volatile organic acids and/or their derivatives are removed at higher temperatures of the exhaust air and the necessity to cool down the exhaust air, which would be necessary in the case of the common removal of pollutants from air, is eliminated. In addition, thanks to the presence of the thermotolerant strain volatile organic acids and/or their derivatives are removed even in the case of a decrease in temperature when the activity of the thermophylic strain is inhibited and the activity of the thermotolerant strain is on the rise. A great advantage of this arrangement is a reduction of the adaptation or initial phase of the biofilter. The adaptation phase of the microorganisms during which the cells are getting used to the new environment has been minimized by setting the conditions. This allows lots of time to be saved along with a reduction in expenses and lead time necessary to make the process of the degradation of volatile organic acids and/or their derivatives in the biofilter fully functional.

Among volatile organic acids propionic and butyric acids are present most frequently. The mixture of microorganisms *Geobacillus caldoxylosilyticus* BGSC W98A1 and *Aeribacillus pallidus* represents a very efficient unit for the removal of propionic acid from air. Degradation of this acid is a matter of major concern in various industries.

To improve degradation efficiency polyurethane foam will be used. The foam will be prepared from a mixture of aliphatic polyisocyanate and polyester polyols in the weight ratio ranging from 3:1 to 1:3 with added starch derivatives in the quantity ranging from 10 to 50 weight per cent. The ratio of these compositions has a positive impact on the adhesion of the cells of the microorganisms onto the packing material of the biofilter surface. Based on the cell surface charge, the so-called zeta potential, and the cell surface hydrophobicity this composition represents suitable hydrophobicity of the surface thanks to which the cells of the microorganisms adhere to the surface of the packing material of the biofilter prepared in this manner. The structure of acetylated starch (a) and polyurethane foam (b) is provided in the diagram mentioned below:

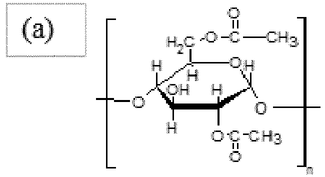

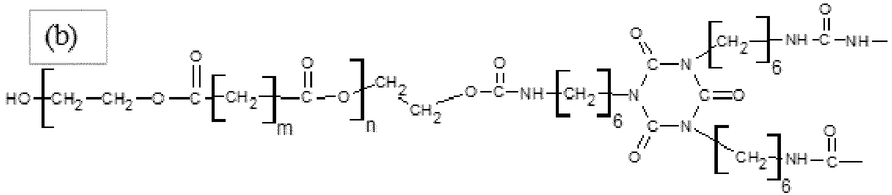

The subject-matter of the invention also covers a biofilm to implement the method based on this invention concerning biological treatment in an environment whose temperature exceeds 35 °C to remove volatile organic acids and/or their derivatives, comprised of microorganisms capable of degrading volatile organic acids and/or their derivatives, that is immobilised on the biofilter packing material of the biofilter formed by biodegradable material on the basis of polyurethane foam. The summary of the invention is based on the microorganisms creating the biofilm being a mixture of the thermophylic strain *Geobacillus caldoxylosilyticus* BGSC W98A1 and the thermotolerant strain *Aeribacillus pallidus* in the ratio ranging from 1:5 to 5:1. The mixture of this composition is able to degrade volatile organic acids and/or their derivatives within a wide range of temperatures thus representing an economically advantageous solution as the degradation occurs at higher temperatures thanks to the thermophylic strain and also at decreased temperatures thanks to the thermotolerant strain.

In the preferred embodiment, the ratio of *Geobacillus caldoxylosilyticus* BGSC W98A1 and *Aeribacillus pallidus* in the biofilm ranges 1:2 or 2:1. If operated at the upper limit of the temperature interval, which means at temperatures ranging from 70 to 75 °C, the preferred ratio of *Geobacillus caldoxylosilyticus* BGSC W98A1 and *Aeribacillus pallidus* in the biofilm is 2:1. At higher temperatures the thermophylic strain is active and the representation of this strain in the biofilm is therefore higher. If operated at the lower limit of the temperature interval, which means at temperatures ranging from 35 to 40 °C, the preferred ratio of *Geobacillus caldoxylosilyticus* BGSC W98A1 and *Aeribacillus pallidus* in the biofilm is 1:2. At lower temperatures the thermotolerant strain is more active and therefore a higher representation of this microorganism in the biofilm is preferred.

The subject-matter of the invention is also the biofilm medium to implement the method based on this invention to immobilize the microorganisms capable of degrading volatile organic acids and/or their derivatives present in exhaust air in an environment whose temperature exceeds 35 °C, which is comprised of biodegradable material on the basis of polyurethane foam. The summary of the invention rests in the polyurethane foam on the basis of aliphatic polyisocyanate and polyester polyols forming a mixture with a volatile organic acid. In addition, the volatile organic acid represents a secondary source of energy for the immobilised microorganisms. In the preferred embodiment the volatile organic acid is selected from a group of acids comprising propionic acid and butyric acid. In the most preferred embodiment the selected volatile organic acid refers to propionic acid.

The subject-matter of the invention also covers the medium of the biofilter to implement the method based on this invention for biological treatment of exhaust air in an environment whose temperature exceeds 35 °C to remove volatile organic acids and/or their derivatives. The biofilter medium consists of a biofilm formed by microorganisms capable of degrading volatile organic acids and/or their derivatives and a packing material of the biofilter onto which the biofilm is immobilised. The packing material of the biofilter is formed by biodegradable material based on polyurethane foam for biological treatment of exhaust air in an environment whose temperature exceeds 35 °C to remove volatile organic acids and/or their derivatives. The summary of the invention rests in the biofilm consisting of a mixture of the thermophylic strain *Geobacillus caldoxylosilyticus* BGSC W98A1 and the thermotolerant strain *Aeribacillus pallidus* in ratio ranging from 1:5 to 5:1, and the polyurethane foam of the packing material of the biofilter is based on aliphatic polyisocyanate and polyester polyols forming a mixture with a volatile organic acid with the volatile organic acid representing a secondary source of energy for the immobilised microorganisms.

The advantages of the biological treatment of exhaust air to remove volatile organic compounds based on this invention represents an efficient and easy removal of volatile organic acids and/or their derivatives from exhaust air within a variable temperature range. Its operation is economically advantageous as the step resting in the cooling down of exhaust air released from an industrial facility is eliminated thanks to the thermophylic microorganisms present in the biofilter whose operation is not interrupted in the case of a decrease in temperature thanks to the thermotolerant microorganisms. In addition, this method allows the adaptation phase of the biofilter to be reduced and the full operation of the biofilter is reached within a very short time. This approach has intensified the process of removing organic acids and/or their derivatives from exhaust air which is usually exhaustive, expensive and complicated.

### Explanation of drawings

The present invention will be explained in detail by means of the following figures where:
- Fig. 1: provides a chart depicting the influence of the inoculum composition on the course of the adaptation phase depending on the operating conditions,
- Fig. 2: provides a chart depicting a development of metabolic potential for a selected group of pollutants using the method of goal-directed adaptation of the inoculum depending on the final application by the addition of the pollutant as a secondary source of carbon and energy into the culture medium,
- Fig. 3: provides a chart depicting the time dependence of the biochemical consumption of oxygen by the strain *Geobacillus caldoxylosilyticus* BGSC W98A1 immobilised on the PUR A packing material of the biofilter at 50 °C,
- Fig. 4: provides a chart of the time dependence of the biochemical consumption of oxygen by the strain *Geobacillus caldoxylosilyticus* BGSC W98A1 immobilised on the PUR A packing material of the biofilter at 40 °C,
- Fig. 5: provides a chart of the time dependence of the biochemical consumption of oxygen by the strain *Aeribacillus pallidus* immobilised on the PUR A packing material of the biofilter at 50 °C,
- Fig. 6: provides a chart depicting the concentrations of the gaseous mixtures in a continuously operated biofilter.

### Examples of the invention embodiments

It shall be understood that the specific cases of the invention embodiments described and depicted below are provided for illustration only and do not limit the invention to the examples provided here. Those skilled in the art will find or, based on routine experiment, will be able to provide a greater or lesser number of equivalents to the specific embodiments of the invention which are described here. Also such equivalents will be included in the scope of the following claims.

The culturing of the microorganisms is performed in the Microplate Reader ELx808 apparatus where the ability of the microorganisms to grow in individual model solutions of selected pollutants is monitored in three repeated series and where control culturing, which means without an added source of carbon and energy, is performed. The growth of the microorganisms is expressed as a change in optical density (O.D.) which is measured automatically every half an hour at wavelengths 450 and 630 nm. The inocula are prepared by submerged culturing of the microorganisms in a medium selected depending on the experiment nature with an added source of carbon and energy with relevant concentration. Data is evaluated based on direct indicators, specifically an increase/decrease in optical density of the culture medium depending on a defined composition of the model solution allowing the stimulating/inhibiting effect of the solution on the respective microbial population to be evaluated. An increase in optical density is regarded as the manifestation of the stimulating effect of the tested solution. On the other hand, a decrease in optical density is regarded as the manifestation of the inhibiting effect of the tested solution. The cultures are simultaneously tested in the Oxitop apparatus allowing CO₂ generated during aerobic culturing to be measured. CO₂ is absorbed in sodium hydroxide solution. This reduces pressure in the closed culture bottle corresponding to consumed O₂. Based on the state equation it is then possible to calculate a decrease in the partial pressure of O₂ that is consumed by the bacteria. All experiments were performed in 3 repeated series. Measured data was later compared to the model of bacterial growth in the GraphPad Prism 4.0 application and the respective growth parameters (i.e. specific growth rate and the lag (or the adaptation phase) duration) were calculated.

The following examples of the invention embodiments 1 to 8 tested the influence of the inoculum composition on the course of the adaptation phase in relation to the operating conditions - the average temperature.

### Example 1

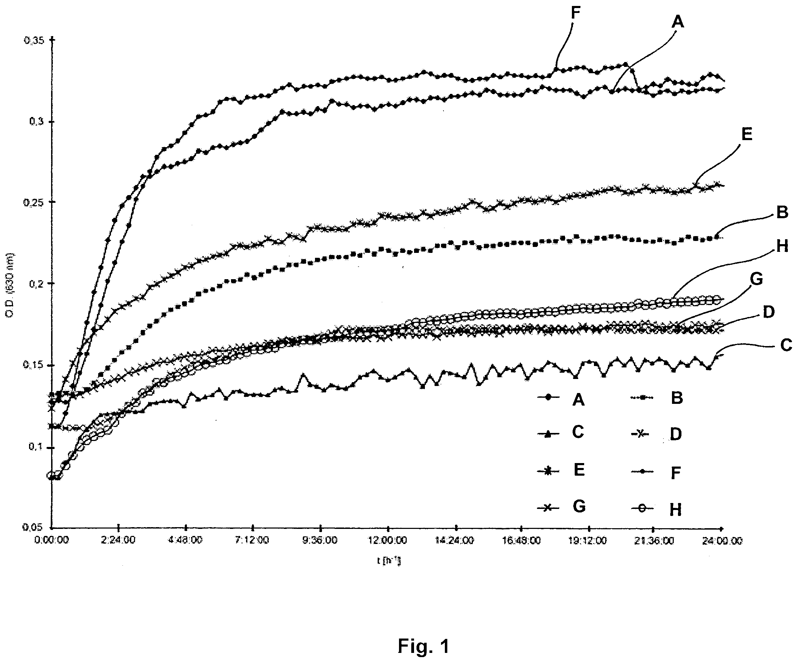

The inoculum comprising the strain *Geobacillus caldoxylosilyticus* BGSC W98A1: *Aeribacillus pallidus* in the ratio of 2:1 was immobilised on a packing material of the biofilter created from the PUR A polyurethane foam and subsequently preserved by lyophilization. The culture prepared in this manner with initial optical density O.D. = 0.1 at the culture temperature 50 °C was subsequently used in the degradation test for the degradation of propionic acid. The concentration of the used propionic acid was c = 500 mg/l and the same degradation test in the suspension without propionic acid was used as a control. In Fig. 1 the curve **A** indicates the growth of the microbial population in time characterizing the influence of the inoculum composition on the course of the adaptation phase depending on temperature.

### Example 2

The inoculum comprising the strain *Geobacillus caldoxylosilyticus* BGSC W98A1: *Aeribacillus pallidus* in the ratio of 1:2 was immobilised on a packing material of the biofilter created from the PUR A polyurethane foam and subsequently preserved by lyophilization. The culture prepared in this manner with initial optical density O.D. = 0.1 at the culture temperature 50 °C was subsequently used in the degradation test for the degradation of propionic acid. The concentration of the used propionic acid was c = 500 mg/l and the same degradation test in the suspension without propionic acid was used as a control. In Fig. 1 the curve **B** indicates the growth of the microbial population in time characterizing the influence of the inoculum composition on the course of the adaptation phase depending on temperature.

### Example 3

The inoculum comprising the strain *Geobacillus caldoxylosilyticus* BGSC W98A1 was immobilised on a packing material of the biofilter created from the PUR A polyurethane foam and subsequently preserved by lyophilization. The culture prepared in this manner with initial optical density O.D. = 0.1 at the culture temperature 50 °C was subsequently used in the degradation test for the degradation of propionic acid. The concentration of the used propionic acid was c = 500 mg/l and the same degradation test in the suspension without propionic acid was used as a control. In Fig. 1 the curve **C** indicates the growth of the microbial population in time characterizing the influence of the inoculum composition on the course of the adaptation phase depending on temperature.

### Example 4

The inoculum comprising *Aeribacillus pallidus* was immobilised on a packing material of the biofilter created from the PUR A polyurethane foam and subsequently preserved by lyophilization. The culture prepared in this manner with initial optical density O.D. = 0.1 at the culture temperature 50 °C was subsequently used in the degradation test for the degradation of propionic acid. The concentration of the used propionic acid was c = 500 mg/l and the same degradation test in the suspension without propionic acid was used as a control. In Fig. 1 the curve **D** indicates the growth of the microbial population in time characterizing the influence of the inoculum composition on the course of the adaptation phase depending on temperature.

### Example 5

The inoculum comprising the strain *Geobacillus caldoxylosilyticus* BGSC W98A1: *Aeribacillus pallidus* in the ratio of 2:1 was immobilised on a packing material of the biofilter created from the PUR A polyurethane foam and subsequently preserved by lyophilization. The culture prepared in this manner with initial optical density O.D. = 0.1 at the culture temperature 40 °C was subsequently used in the degradation test for the degradation of propionic acid. The concentration of the used propionic acid was c = 500 mg/l and the same degradation test in the suspension without propionic acid was used as a control. In Fig. 1 the curve **E** indicates the growth of the microbial population in time characterizing the influence of the inoculum composition on the course of the adaptation phase depending on temperature.

### Example 6

The inoculum comprising the strain *Geobacillus caldoxylosilyticus* BGSC W98A1: *Aeribacillus pallidus* in the ratio of 1:2 was immobilised on a packing material of the biofilter created from the PUR A polyurethane foam and subsequently preserved by lyophilization. The culture prepared in this manner with initial optical density O.D. = 0.1 at the culture temperature 40 °C was subsequently used in the degradation test for the degradation of propionic acid. The concentration of the used propionic acid was c = 500 mg/l and the same degradation test in the suspension without propionic acid was used as a control. In Fig. 1 the curve **F** indicates the growth of the microbial population in time characterizing the influence of the inoculum composition on the course of the adaptation phase depending on temperature.

### Example 7

The inoculum comprising the strain *Geobacillus caldoxylosilyticus* BGSC was immobilised on a packing material of the biofilter created from the PUR A polyurethane foam and subsequently preserved by lyophilization. The culture prepared in this manner with initial optical density O.D. = 0.1 at the culture temperature 40 °C was subsequently used in the degradation test for the degradation of propionic acid. The concentration of the used propionic acid was c = 500 mg/l and the same degradation test in the suspension without propionic acid was used as a control. In Fig. 1 the curve **G** indicates the growth of the microbial population in time characterizing the influence of the inoculum composition on the course of the adaptation phase depending on temperature.

### Example 8

The inoculum comprising *Aeribacillus pallidus* was immobilised on a packing material of the biofilter created from the PUR A polyurethane foam and subsequently preserved by lyophilization. The culture prepared in this manner with initial optical density O.D. = 0.1 at the culture temperature 40 °C was subsequently used in the degradation test for the degradation of propionic acid. The concentration of the used propionic acid was c = 500 mg/l and the same degradation test in the suspension without propionic acid was used as a control. In Fig. 1 the curve **H** indicates the growth of the microbial population in time characterizing the influence of the inoculum composition on the course of the adaptation phase depending on temperature.

The purposefully selected ratio of the representatives of the two bacterial strains - *Geobacillus* and *Aeribacillus* with evident capability of growth competition within the given range of temperature-dependent growth conditions has a positive impact on the growth rate of the inoculum and the total growth of the microbial population in the course of the biofiltration process as provided in Fig. 1. This increase can be up to twice as high.

The following group of examples 9 through 14 tested the development of metabolic potential for a selected group of pollutants using the method of goal-directed adaptation of the inoculum depending on the final application by the addition of the pollutant as a secondary source of carbon and energy into the culture medium.

### Example 9

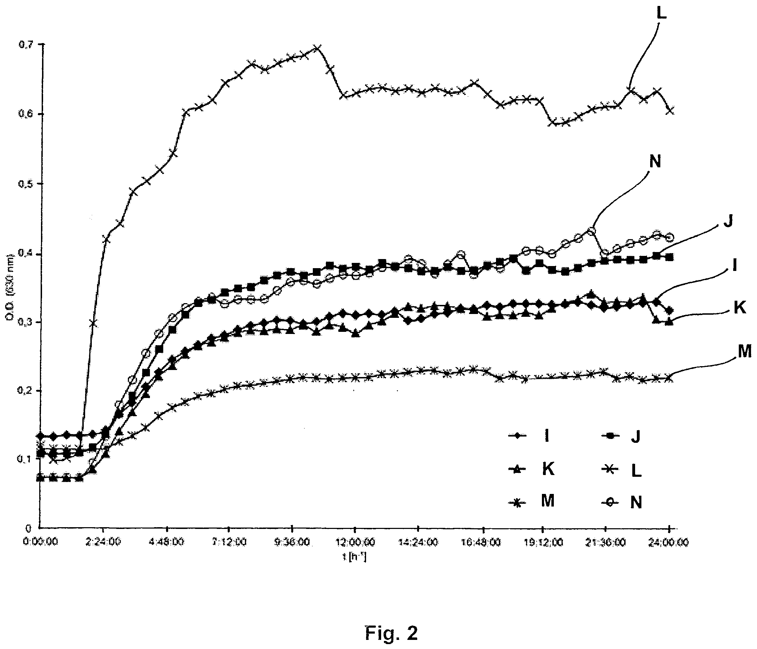

The inoculum comprising the strain *Geobacillus caldoxylosilyticus* BGSC W98A1 was immobilised on a packing material of the biofilter created from the PUR A polyurethane foam with glucose and subsequently preserved by lyophilization. The culture prepared in this manner with initial optical density O.D. = 0.1 at the culture temperature 40 °C was subsequently used in the degradation test for the degradation of propionic acid. The concentration of the used propionic acid was c = 500 mg/l and the same degradation test in the suspension without propionic acid was used as a control. In Fig. 2 the curve **I** depicts the course of the growth of the microorganisms under given conditions.

### Example 10

The inoculum comprising the strain *Geobacillus caldoxylosilyticus* BGSC W98A1 was immobilised on a packing material of the biofilter created from the PUR A polyurethane foam with integrated propionic acid and subsequently preserved by lyophilization. The culture prepared in this manner with initial optical density O.D. = 0.1 at the culture temperature 40 °C was subsequently used in the degradation test for the degradation of propionic acid. The concentration of the used propionic acid was c = 500 mg/l and the same degradation test in the suspension without propionic acid was used as a control. In Fig. 2 the curve **J** depicts the course of the growth of the microorganisms under given conditions.

### Example 11

The inoculum comprising *Aeribacillus pallidus* was immobilised on a packing material of the biofilter created from the PUR A polyurethane foam with glucose and subsequently preserved by lyophilization. The culture prepared in this manner with initial optical density O.D. = 0.1 at the culture temperature 40 °C was subsequently used in the degradation test for the degradation of propionic acid. The concentration of the used propionic acid was c = 500 mg/l and the same degradation test in the suspension without propionic acid was used as a control. In Fig. 2 the curve **K** depicts the course of the growth of the microorganisms under given conditions.

### Example 12

The inoculum comprising *Aeribacillus pallidus* was immobilised on a packing material of the biofilter created from the PUR A polyurethane foam with integrated propionic acid and subsequently preserved by lyophilization. The culture prepared in this manner with initial optical density O.D. = 0.1 at the culture temperature 40 °C was subsequently used in the degradation test for the degradation of propionic acid. The concentration of the used propionic acid was c = 500 mg/l and the same degradation test in the suspension without propionic acid was used as a control. In Fig. 2 the curve **L** depicts the course of the growth of the microorganisms under given conditions.

### Example 13

The inoculum comprising the strain *Geobacillus caldoxylosilyticus* BGSC W98A1 and the inoculum *Aeribacillus pallidus* used in the ratio of 1:1 were immobilised on a packing material of the biofilter created from the PUR A polyurethane foam with glucose and subsequently preserved by lyophilization. The mixture of cultures prepared in this manner with initial optical density O.D. = 0.1 at the culture temperature 40 °C was subsequently used in the degradation test for the degradation of propionic acid. The concentration of the used propionic acid was c = 500 mg/l and the same degradation test in the suspension without propionic acid was used as a control. In Fig. 2 the curve **M** depicts the course of the growth of the microorganisms under given conditions.

### Example 14

The inoculum comprising the strain *Geobacillus caldoxylosilyticus* BGSC W98A1 and the inoculum *Aeribacillus pallidus* used in the ratio of 1:1 were immobilised on a packing material of the biofilter created from the PUR A polyurethane foam with integrated propionic acid and subsequently preserved by lyophilization. The mixture of cultures prepared in this manner with initial optical density O.D. = 0.1 at the culture temperature 40 °C was subsequently used in the degradation test for the degradation of propionic acid. The concentration of the used propionic acid was c = 500 mg/l and the same degradation test in the suspension without propionic acid was used as a control. In Fig. 2 the curve **N** depicts the course of the growth of the microorganisms under given conditions.

**Table 1: The increase in optical density corresponding to the growth of the microorganisms in examples 9 through 14 over 24 hours.**

| | **Ex**. **9** | **Ex. 10** | **Ex. 11** | **Ex. 12** | **Ex. 13** | **Ex. 14** |
|---|---|---|---|---|---|---|
| Increase in O.D. (630 nm) | 0.21 | 0.39 | 0.29 | 0.60 | 0.39 | 0.41 |

The development of metabolic potential for the selected group of pollutants using the method of the goal-directed adaptation of the inoculum depending on final application by the addition of the pollutant as a secondary source of carbon and energy into the culture medium has a positive impact on the inoculum growth rate on the selected pollutant, i.e. propionic acid, namely by 85% (the strain *Geobacillus caldoxylosilyticus* BGSC W98A1) up to 106% (*Aeribacillus pallidus*) compared to the control culture on easily degradable substrate as a source of carbon and energy, i.e. glucose, namely even in the case that the temperature regime of the cultured strain failed to correspond to its optimum. The results of examples 9 through 14 are depicted in Fig. 2.

The third group of examples 15 and 16 demonstrates the increase in the efficiency of the biofiltration technology by using biodegradable plastic material with the addition of the pollutant as a packing material of the biofilter for the biofilter medium.

### Example 15

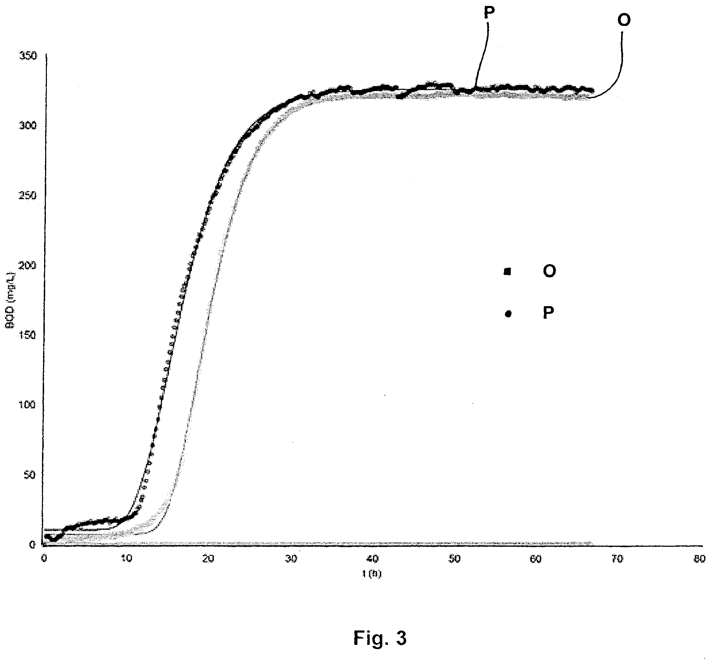

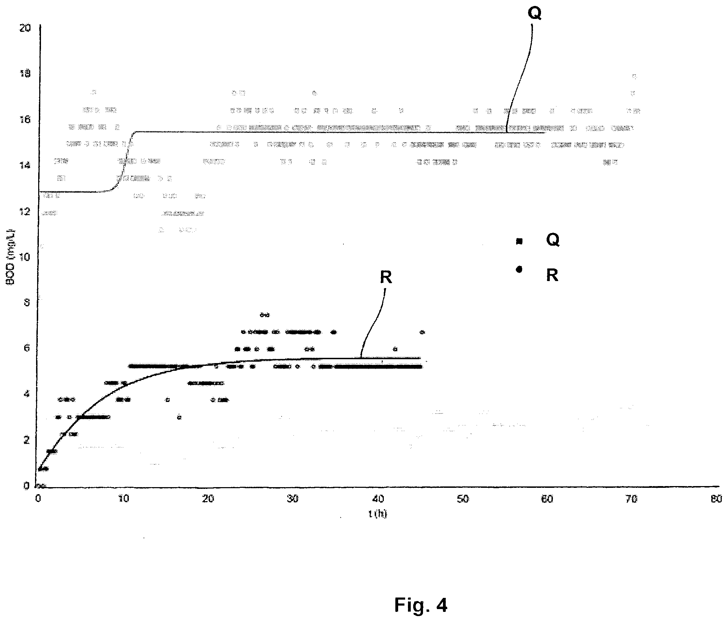

Fig. 3 depicts the biochemical consumption of oxygen by the strain *Geobacillus caldoxylosilyticus* BGSC W98A1 immobilised on a packing material of the biofilter formed from the PUR A polyurethane foam without propionic acid addition as the curve **P** and the biochemical consumption of oxygen by the strain *Geobacillus caldoxylosilyticus* BGSC W98A1 immobilised on a packing material of the biofilter formed from the PUR A polyurethane foam with integrated propionic acid as the curve **O**. The mixture of cultures prepared in this manner with initial optical density O.D. = 0.1 at the culture temperature 50 °C was subsequently used in the degradation test for the degradation of propionic acid. The concentration of the used propionic acid was c = 500 mg/l and the same degradation test in the suspension without propionic acid was used as a control. A similar test was performed with the same strain in an environment whose temperature was 40 °C, as depicted in Fig. 4 by the curves **Q** and **R**.

**Table 2: The evaluation of tests from example 15.**

| **Strain *Geobacillus caldoxylosilyticus* BGSC W98A1 (50 °C)** | **Lag phase (h)** | **growth rate (mg O₂/l/h)** | ***smodch*** | ***R²*** |
|---|---|---|---|---|
| propionic acid (500mg/l)+ PUR A foam | 15.1 | 32.5 | *0.2* | 0.99 |
| propionic acid (500 mg/l) | 11.0 | 28.5 | *0.3* | 0.99 |
| PUR A foam | NA | 0.015 | *0.002* | 0.12 |

**Table 3: The evaluation of tests from example 15.**

| **Strain *Geobacillus caldoxylosilyticus* BGSC W98A1 (40 °C)** | **Lag phase (h)** | **growth rate (mg O₂/l/h)** | ***smod ch*** | ***R²*** |
|---|---|---|---|---|
| propionic acid (500mg/l)+ PUR A foam | 10.9 | 1.8 | *8.2* | 0.007 |
| propionic acid (500mg/l) | NA | 0.9 | *1.5* | 0.75 |
| PUR A foam | NA | NA | *NA* | NA |

The strain *Geobacillus caldoxylosilyticus* BGSC W98A1 demonstrates, in the presence of the packing material of the biofilter formed by the PUR A polyurethane foam with integrated propionic acid, a higher degradation rate in respect of the tested pollutants, which means propionic acid. In the case of propionic acid, an increase in the degradation rate at the culture temperature 50 °C by 14% has been achieved as depicted in Fig. 3. At the culture temperature of 40 °C, as tested in examples 9 through 14, the increase was significantly lower compared to that at 50 °C. However, the presence of the PUR A biodegradable foam increased the growth rate by 100% as shown in Fig. 4.

### Example 16

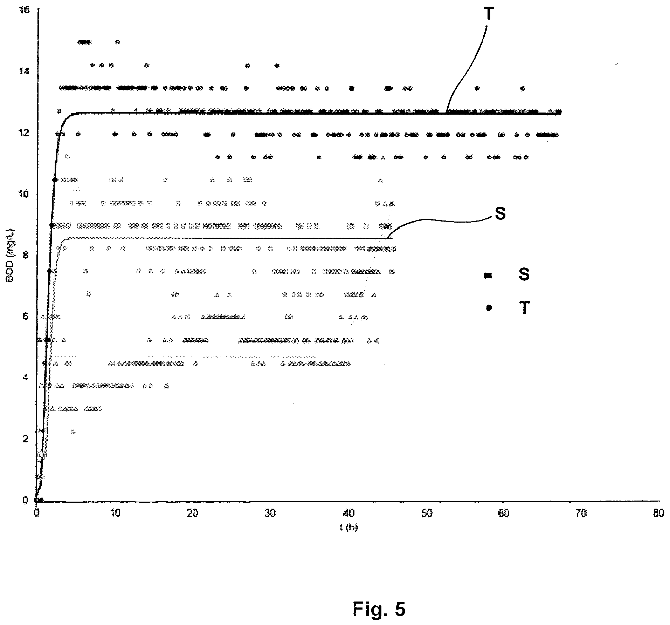

Fig. 5 depicts the biochemical consumption of oxygen by the strain *Aeribacillus pallidus* immobilised on a packing material of the biofilter formed from the PUR A polyurethane foam without propionic acid addition as the curve **T** and the biochemical consumption of oxygen by the strain *Aeribacillus pallidus* immobilised on a packing material of the biofilter formed from the PUR A polyurethane foam with integrated propionic acid as the curve **S**. The culture prepared in this manner with initial O.D. = 0.1 at the culture temperature 50 °C was subsequently used in the degradation test for the degradation of propionic acid. The concentration of the used propionic acid was c = 500 mg/l and the same degradation test in the suspension without propionic acid was used as a control.

**Table 4: The evaluation of tests from example 16.**

| ***Aeribacillus pallidus* (50°C)** | **Lag phase (h)** | **growth rate (mg O₂/l/h)** | ***smodch*** | ***R²*** |
|---|---|---|---|---|
| propionic acid (500mg/l)+ PUR A foam | 1.2 | 6.6 | *1.5* | 0.51 |
| propionic acid (500mg/l) | 0.6 | 7.9 | *0.7* | 0.83 |
| PUR A foam | 39.2 | 0.8 | *0.3* | 0.08 |

The strain *Aeribacillus pallidus* demonstrates in the presence of the packing material of the biofilter formed from the PUR A polyurethane foam with integrated propionic acid at 50 °C a significantly lower rate of the consumption of oxygen than the strain *Geobacillus caldoxylosilyticus* BGSC W98A1. In combination with the PUR A polyurethane foam, it has a twice as long lag but a comparable growth rate, i.e. the consumption of oxygen. This is depicted in Fig. 5.

Considering the high degradation rate concerning the tested pollutant, which means propionic acid, its addition into the packing material of the biofilter with both tested strains, which are both immobilised on the packing material of the biofilter for the degradation of propionic acid and other volatile organic pollutants, this effect has been proven in the presence of both these strains.

Another group of examples 17 through 24 depicts the elimination of volatile organic compounds in the biofilter simulating the variability of the quality of exhaust gas leaving the facility.

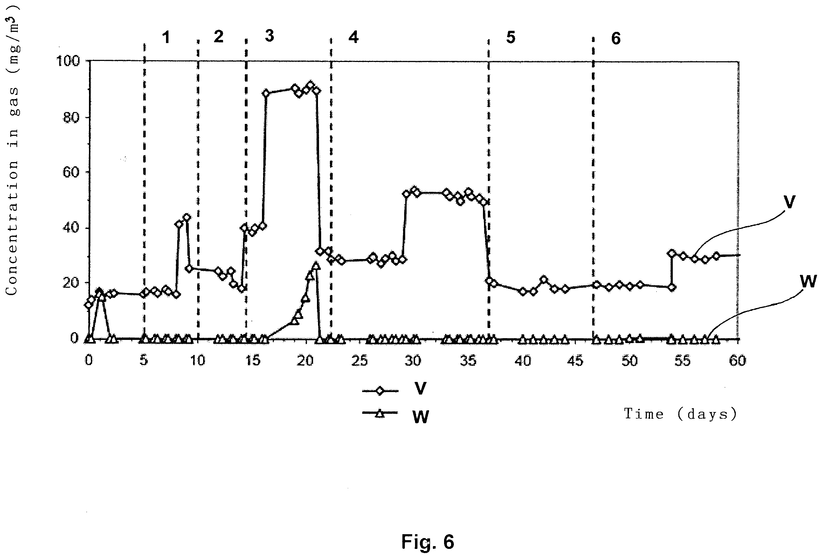

Examples of tested gaseous mixtures in a continuously operated biofilter with the results of the tested gaseous mixtures are depicted in Fig. 6 where the curve **V** depicts the input concentration of gas and the curve **W** shows the output concentration of gas. Fig. 6 depicts results of tested gaseous mixtures in a continuously operated biofilter where **1** represents a mixture of butanol and butyric acid in the ratio of 10:1, **2** represents a mixture of butanol and butyric acid in the ratio of 2:1, **3** represents a mixture of butanol and butyric acid in the ratio of 1:1, **4** represent pure butyric acid, **5** represents a mixture of butanol and tetramethylamine in the ratio of 10:1 and **6** represents a mixture of butanol and tetramethylamine in the ratio of 5:1.

### Example 17

A gaseous mixture was tested in a continuously operated biofilter where the weight ratio of butyric acid and butanol is 1:1. The PID value was at 40 mg.m⁻³; RE = 100%.

### Example 18

A gaseous mixture was tested in a continuously operated biofilter with the input concentration of the mixture containing butyric acid and butanol in the ratio of 1:1 expressed as the PID value, which was 88 mg.m⁻³, RE = 80%.

### Example 19

An example of a gaseous mixture tested in a continuously operated biofilter where the mixture contained pure butyric acid with the input concentration of the mixture expressed as the PID value, which was 30 mg.m⁻³, RE = 100%.

### Example 20

A gaseous mixture was tested in a continuously operated biofilter where the mixture contained pure butyric acid. PID 30 mg.m⁻³; RE = 100%

### Example 21

A gaseous mixture was tested in a continuously operated biofilter where the mixture contained butyric acid. PID 50 mg.m⁻³; RE = 100%

The suitability of the biofilter for the removal of volatile organic compounds was confirmed not only by the measurements of the output concentration of organic compounds by the photoionization detector (PID) and by the monitoring of elimination efficiency but also by sensory testing of output air.

### Industrial applicability

The method of biological treatment of exhaust air in an environment whose temperature is higher than 35 °C to remove volatile organic acids and/or their derivatives based on this invention can be utilized in various industries producing gases with organic pollutants polluting the environment. The most extensive application of the solution based on this invention can be seen in incineration plants, composting plants, smoke houses or wastewater treatment plants.

## Claims

1. The method of biological treatment of exhaust air in an environment whose temperature exceeds 35 °C to remove volatile organic acids and/or their derivatives where the exhaust air is supplied into a biofilter onto a packing material of the biofilter formed by biodegradable material on the basis of polyurethane foam and equipped with a biofilm consisting of immobilised microorganisms capable of removing volatile organic acids and/or their derivatives, **characterized in that** the packing material of the biofilter is enriched with a volatile organic acid as a secondary source of energy for the immobilised microorganisms with the used biofilm being a mixture of the thermophylic bacterial strain *Geobacillus caldoxylosilyticus* BGSC W98A1 and the thermotolerant bacterial strain *Aeribacillus pallidus* in the ratio ranging from 1:5 to 5:1, with exhaust air being supplied to the biofilter within the temperature range from 35 to 75 °C.

2. The method according to claim 1 **characterized in that** the volatile organic acid is selected from a group comprising propionic acid and butyric acid.

3. The method according to claim 1 or 2 **characterized in that** the volatile organic acid is propionic acid.

4. The method according to any of claims 1 through 3 **characterized in that** the polyurethane foam is prepared from a mixture of aliphatic polyisocyanate and polyester polyols in the weight ratio ranging from 3:1 to 1:3 with added starch derivatives in the quantity of 10 to 50 wt per cent.

5. The biofilm to implement the method according to any of claims 1 through 4, formed by microorganisms capable of degrading volatile organic acids and/or their derivatives immobilised on a packing material of the biofilter of the biofilter prepared from biodegradable material on the basis of polyurethane foam for the biological treatment of exhaust air in an environment whose temperature exceeds 35 °C to remove volatile organic acids and/or their derivatives **characterized in that** the microorganisms forming the biofilm are comprised of the thermophylic strain *Geobacillus caldoxylosilyticus* BGSC W98A1 and the thermotolerant strain *Aeribacillus pallidus* in the ratio ranging from 1:5 to 5:1.

6. The biofilm according to claim 5, **characterized in that** the ratio of *Geobacillus caldoxylosilyticus* BGSC W98A1 and *Aeribacillus pallidus* in the biofilm is 2:1.

7. The biofilm according to claim 5, **characterized in that** the ratio of *Geobacillus caldoxylosilyticus* BGSC W98A1 and *Aeribacillus pallidus* in the biofilm is 1:2.

8. The packing material of the biofilter of the biofilter to implement the method according to any of claims 1 through 4 for the immobilisation of the microorganisms capable of degrading volatile organic acids and/or their derivatives from exhaust air in an environment whose temperature exceeds 35 °C prepared from biodegradable material on the basis of polyurethane foam **characterized in that** the polyurethane foam is based on aliphatic polyisocyanate and polyester polyols forming a mixture with the volatile organic acid with the volatile organic acid forming a secondary source of energy for the immobilised microorganisms.

9. The packing material of the biofilter according to claim 8 **characterized in that** the volatile organic acid is selected from a group comprising propionic acid and butyric acid.

10. The packing material of the biofilter according to claim 8 or 9 **characterized in that** the volatile organic acid is propionic acid.

11. The biofilter medium to implement the method according to any of claims 1 through 4 for the biological treatment of exhaust air in an environment whose temperature exceeds 35 °C to remove volatile organic acids and/or their derivatives consisting of a biofilm capable of degrading volatile organic acids and/or their derivatives and a packing material of the biofilter on which the biofilm is immobilised with the packing material of the biofilter being formed by biodegradable material on the basis of polyurethane foam for the biological treatment of exhaust air in an environment whose temperature exceeds 35 °C to remove volatile organic acids and/or their derivatives **characterised in that** the biofilm is formed by a mixture of the thermophylic strain *Geobacillus caldoxylosilyticus* BGSC W98A1 and the thermotolerant strain *Aeribacillus pallidus* in the ratio ranging from 1:5 to 5:1 and the polyurethane foam of the packing material of the biofilter is based on aliphatic polyisocyanate and polyester polyols forming a mixture with the volatile organic acid and/or its derivatives with the volatile organic acid and/or its derivatives forming a secondary source of energy for the immobilised microorganisms.
